# EUROPÄISCHE PATENTSCHRIFT

(11) **EP 2 803 131 B1**
(45) Veröffentlichungstag und Bekanntmachung des Hinweises auf die Patenterteilung: **10.04.2019**
(21) Anmeldenummer: 12795771.0
(22) Anmeldetag: 23.11.2012
(51) Int. Cl.: H02K 3/40, H01B 17/44, B05D 7/00, H01B 3/42

(54) **GLIMMSCHUTZ**
CORONA SHIELD
DISPOSITIF ANTI-EFFLUVES

(30) Priorität: 10.01.2012 DE 102012000290
(43) Veröffentlichungstag der Anmeldung: 19.11.2014
(73) Patentinhaber: Voith Patent GmbH, 89522 Heidenheim (DE)
(72) Erfinder: HILDINGER, Thomas, 89522 Heidenheim (DE); KÖDDING, Ludger, 89518 Heidenheim (DE); JACOB DA SILVA, Marcelo, SAO PAULO (BR); FIORINI CORDEIRO, Joao, Francisco Morato- SP (BR); DOS SANTOS GONCALVES, Camila, APP 11 A (BR)
(74) Vertreter: Dr. Weitzel & Partner
(86) Internationale Anmeldenummer: PCT/EP2012/073448
(87) Internationale Veröffentlichungsnummer: WO 2013/104457

(56) Entgegenhaltungen:
- US-A- 4 207 482

## Beschreibung

Die Erfindung betrifft einen Glimmschutz nach der im Oberbegriff von Anspruch 1 näher definierten Art. Außerdem betrifft die Erfindung ein Verfahren zum Herstellen eines derartigen Glimmschutzes sowie eine elektrische Maschine mit einem solchen Glimmschutz.

In rotierenden elektrischen Maschinen beziehungsweise Hochspannungsmaschinen sind elektrische Leiter mit einer Hochspannungsisolierung und einem Glimmschutz allgemein bekannt und üblich. Ein entsprechender Glimmschutz sowie eine Maschine, welche einen solchen Glimmschutz verwendet, ist beispielsweise in der DE 102 27 226 A1 beschrieben. Der Glimmschutz, welcher typischerweise einen sogenannten Außenglimmschutz (AGS) und einen Endglimmschutz (EGS) umfasst, wird auf der auf einem elektrischen Leiter angebrachten Hochspannungsisolierung angeordnet. Der sogenannte Außenglimmschutz befindet sich dabei typischerweise in dem Bereich des isolierten elektrischen Leiters, welcher in der elektrodynamischen rotierenden Maschine im Nuten im Rotor oder im Stator angeordnet ist. Der Endglimmschutz wird typischerweise in dem Bereich des elektrischen Leiters angeordnet, welcher über das Material des Rotors beziehungsweise des Stators, typischerweise ein Blechpaket, in axialer Richtung hinausragt.

In der genannten deutschen Offenlegungsschrift ist es dabei beschrieben, dass ein derartiger Glimmschutz auf der Basis eines Bandes, insbesondere aus einem textilen Material, einer Glasfasermatrix, einem Vlies oder dergleichen aufgebaut ist. Um die für einen Glimmschutz übliche eingeschränkte elektrische Leitfähigkeit in der Größenordnung von etwa 10,5 x 10⁵ bis 10,6 x 10⁶ Qm zu gewährleisten, sind auf diesem Material typischerweise elektrisch leitfähige Partikel, beispielsweise Ruß, Siliciumcarbid oder dergleichen, angeordnet. Die genannte deutsche Offenlegungsschrift schlägt als Verbesserung vor, Fasern innerhalb des Vlieses beziehungsweise Gewebes elektrisch leitfähig auszubilden und so den Aufbau zu verbessern. Ungeachtet dessen wird das Band für den Glimmschutz außen auf die Hochspannungsisolierung des elektrischen Leiters aufgewickelt, anschließend mit einem Harz getränkt und ausgehärtet. Typischerweise wird hierfür der sogenannte VPI-Prozess (Vacuum Pressure Impregnation), welcher auch bei der Herstellung der Hochspannungsisolierung eingesetzt wird, verwendet.

Trotz sehr sorgfältiger Arbeit beim Aufbringen des Glimmschutzes kann es durch den Aufbau aus aufgewickeltem Band und nachträglicher Imprägnierung mit Harz immer wieder zu Unregelmäßigkeiten kommen. Es hat sich nun gezeigt, dass diese Unregelmäßigkeiten, welche beispielsweise durch Lufteinschlüsse, nicht zu 100 % sauber gewickelte Bänder oder dergleichen herrühren können, insbesondere im Übergang zwischen dem sogenannten Außenglimmschutz und dem Endglimmschutz von besonderer Bedeutung sind.

Zum weiteren allgemein Stand der Technik wird auf die US 4,207,482 A hingewiesen, welche ein aus Lackschichten aufgebautes Glimmschutzsystem zeigt. Die Aufgabe der hier vorliegenden Erfindung besteht nun darin, einen Glimmschutz für einen elektrischen Leiter in einer rotierenden elektrischen Maschine anzugeben, welcher die genannten Nachteile und Probleme im Bereich des Übergangs zwischen Endglimmschutz und Außenglimmschutz verringert.

Erfindungsgemäß wird diese Aufgabe durch einen Glimmschutz mit den Merkmalen im kennzeichnenden Teil des Anspruchs 1 gelöst. Weitere vorteilhafte Ausgestaltungen ergeben sich aus den restlichen abhängigen Ansprüchen. Außerdem löst ein Verfahren zum Herstellen eines derartigen Glimmschutzes mit den Merkmalen im kennzeichnenden Anspruch 9 die Aufgabe. Weitere vorteilhafte Ausgestaltungen des Verfahrens ergeben sich ebenfalls aus den hiervon abhängigen Ansprüchen. Letztlich ist im Anspruch 11 außerdem eine elektrische Maschine mit einem derartigen Glimmschutz oder einem nach dem Verfahren hergestellten Glimmschutz angegeben.

Bei dem erfindungsgemäßen Glimmschutz ist es vorgesehen, dass der Außenglimmschutz in an sich bekannter Art und Weise auf der Hochspannungsisolierung des elektrischen Leiters angebracht ist. Im Übergangsbereich zwischen dem Außenglimmschutz und dem Endglimmschutz ist dabei zwischen der Hochspannungsisolierung des elektrischen Leiters und dem Band, welches den herkömmlichen Teil des Endglimmschutz bildet, ein Lack mit eingeschränkter elektrischer Leitfähigkeit angeordnet. Ein solcher Lack als Zwischenschicht im unmittelbaren Bereich des Übergangs zwischen dem Außenglimmschutz und in dem Inneren, der Hochspannungsisolierung zugewandten Bereich, des Endglimmschutzes ermöglicht eine deutliche Verbesserung des Glimmschutzes. Dies hat sich den Erfindern bei Versuchen gezeigt.

Der Effekt liegt vermutlich daran, dass der Endglimmschutz in der herkömmlichen Ausführung den Außenglimmschutz um ein geringes Wegstück überlappt. Da in diesem überlappenden Bereich ein Sprung im Außendurchmesser des mit dem Außenglimmschutz versehenen isolierten elektrischen Leiters auftritt, könnte das Problem durch diesen Sprung verursacht sein, welcher Unregelmäßigkeiten in der Wicklung des Bandes und damit gegebenenfalls in der Imprägnierung desselben verursacht. Durch das Einbringen eines Lacks, welcher ebenfalls eine eingeschränkte elektrische Leitfähigkeit aufweist, also seinerseits einen Glimmschutz darstellt, wird diese Problematik verbessert. Eventuelle Unregelmäßigkeiten und Fehlstellen beim gewickelten Teil des Endglimmschutzes, insbesondere aufgrund des sich ändernden Durchmessers, liegen bei dem erfindungsgemäß aufgebauten Glimmschutz nun nicht mehr zwischen der Hochspannungsisolierung und der Umgebung, sondern zwischen zwei Bereichen mit eingeschränkter elektrischer Leitfähigkeit, nämlich der Lackschicht einerseits und dem gewickelten Teil des Endglimmschutzes andererseits. Dadurch lässt sich eine deutliche Verbesserung erzielen, welche zu einer längeren Lebensdauer der Hochspannungsisolierung beziehungsweise des Glimmschutzes und damit letztlich, beim Einsatz in einer rotierenden elektrodynamischen Maschine, zu einer Verringerung der Wartungshäufigkeit führt.

Ein weiterer Effekt liegt auch darin, dass durch den Lack beim Aufbringen eventuelle Fehlstellen, welche im Bereich des Außenglimmschutzes bei dessen Herstellung verblieben sind, durch den Lack mit aufgefüllt werden. Hierdurch wird die Gefahr von elektrischen Entladungen im Bereich der Fehlstellen, welche zu einer Zerstörung des Isolationsmaterials beziehungsweise des Materials des Glimmschutzes führen würden, minimiert.

In einer besonders günstigen und vorteilhaften Weiterbildung des erfindungsgemäßen Glimmschutzes ist es dabei vorgesehen, dass das Band des Endglimmschutzes die Gesamtlänge des Lacks außen umgibt. Der gesamte aufgebrachte Lack liegt in dieser besonders günstigen und vorteilhaften Ausgestaltung also innerhalb des Bandes des Endglimmschutzes. Dadurch ist er ideal vor einer eventuellen Beschädigung von außen geschützt. Er kann daher sehr dünn, vorzugsweise in nur einer Schicht, ausgebildet sein.

Im erfindungsgemäßen Glimmschutz ist es außerdem vorgesehen, dass der Lack auf der elektrischen Isolierung aufgetragen ist und den Außenglimmschutz um eine Wegstrecke überlappt. Der Lack ist also nicht nur seitlich im Anschluss an den Außenglimmschutz auf der Hochspannungsisolierung aufgetragen, sondern überlappt den Außenglimmschutz teilweise. Dadurch wird auch der besonders kritische Bereich der Querschnittsänderung von dem Lack bedeckt.

In einer vorteilhaften Weiterbildung des erfindungsgemäßen Glimmschutzes kann es dabei vorgesehen sein, dass der Lack auf Basis von Harz, vorzugsweise Alkydharz, ausgebildet ist. Ein solcher Lack kann insbesondere aus der Mischung von zwei Harzkomponenten und einem Härter bestehen. Um die benötigte eingeschränkte elektrische Leitfähigkeit zu erreichen, kann der Lack außerdem elektrisch leitfähige und/oder halbleitende Partikel aufweisen. Solche Partikel sind aus dem Bereich der Herstellung von Glimmschutzbändern allgemein bekannt und üblich. Sie können sowohl als herkömmliche Partikel als auch als Nanopartikel ausgebildet sein. Solche Partikel können auch in einen harzbasierten Lack eingebracht werden. Die hierfür verwendete Menge beträgt vorzugsweise 20 bis 60 Gew.-% an elektrisch leitfähigen und/oder halbleitenden Partikeln bezogen auf das Gesamtgewicht des Lacks. Bei der Verwendung von Nanopartikel wird der Anteil dabei typischerweise eher im unteren Bereich der angegebenen Spanne liegen.

Das erfindungsgemäße Verfahren zum Herstellen eines solchen Glimmschutzes sieht es dabei vor, dass ein mit der Hochspannungsisolierung und dem Außenglimmschutz versehener elektrischer Leiter mit dem Endglimmschutz versehen wird, wozu seitlich neben dem Außenglimmschutz, und insbesondere überlappend mit diesem, der Übergangsbereich der Hochspannungsisolierung mit dem Lack bestrichen wird, wonach der Lack getrocknet und/oder ausgehärtet wird, und wonach das Band des Endglimmschutzes aufgewickelt, mit einem Harz getränkt und ausgehärtet wird. Das Verfahren zum Herstellen des erfindungsgemäßen Glimmschutzes sieht es also vor, dass in den herkömmlichen Herstellungsprozess für den Glimmschutz ein zusätzlicher Schritt integriert wird. Der mit dem Außenglimmschutz versehene elektrisch isolierte Leiter wird dazu im Übergangsbereich mit dem Lack bestrichen. Nachdem dieser getrocknet und/oder ausgehärtet ist, wird das Band des Endglimmschutzes in der Art eines bisher bekannten und üblichen Endglimmschutzes aufgewickelt, mit einem Harz getränkt und ausgehärtet, beispielsweise im Rahmen eines VPI-Prozesses.

Teil der Erfindung ist außerdem eine elektrische Maschine mit einem Glimmschutz, wobei der Glimmschutz erfindungsgemäß ausgeführt ist und/oder durch das erfindungsgemäße Verfahren hergestellt ist. Eine solche elektrische Maschine kann dabei insbesondere als rotierende elektrodynamische Maschine ausgebildet sein, beispielsweise als Motor, Generator oder auch als Phasenschieber.

In einer weiteren sehr günstigen Ausgestaltung der elektrischen Maschine ist es dabei vorgesehen, dass diese als Hochspannungsmotor/-generator ausgebildet ist, welcher eine Nennspannung von mehr als 15 kV aufweist.

Weitere vorteilhafte Ausgestaltungen des Glimmschutzes, des Verfahrens zu seiner Herstellung sowie der elektrischen Maschine und ihrer Verwendung ergeben sich ferner aus den restlichen abhängigen Ansprüchen und werden anhand des Ausführungsbeispiels deutlich, welches nachfolgend unter Bezugnahme auf die Figuren näher beschrieben wird.

Dabei zeigen:
- Figur 1: eine Prinzipdarstellung eines Maschinensatzes für eine Wasserkraftanlage;
- Figur 2: einen Ausschnitt aus einem Teil eines Rotors der in Figur 1 gezeigten Maschinensatzes; und
- Figur 3: einen Querschnitt durch eine bevorzugte Ausführungsform des erfindungsgemäßen Glimmschutzes.

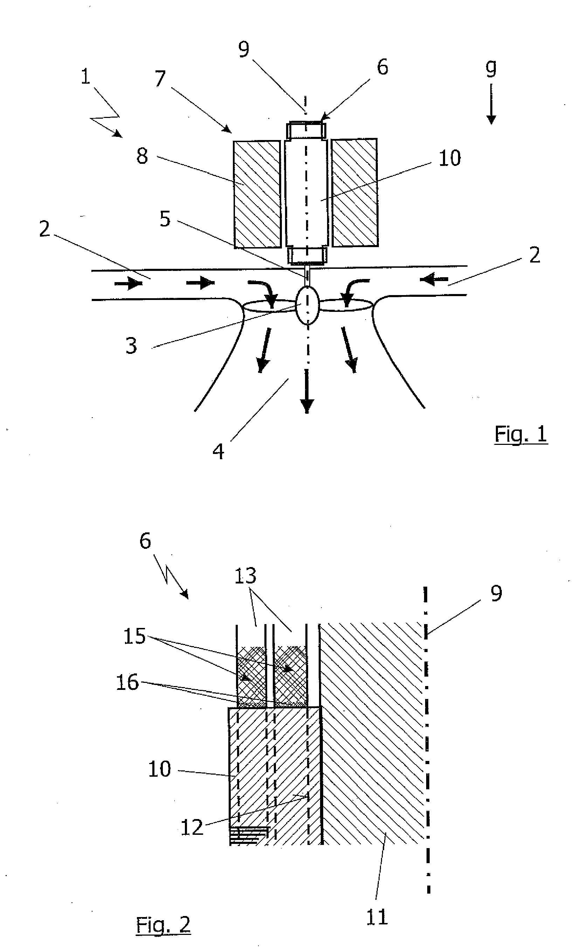

In der Darstellung der Figur 1 ist sehr stark schematisiert eine Wasserkraftanlage 1 zu erkennen. Kern der Wasserkraftanlage 1 ist ein Zuleitungssystem 2, welches Wasser aus dem Bereich eines hier nicht dargestellten Oberwassers zu einer Wasserturbine 3 leitet und durch einen prinzipmäßig angedeuteten Diffusor 4 in den Bereich eines ebenfalls nicht dargestellten Unterwassers abführt. Die Wasserturbine 3 ist dabei über eine Welle 5 mit einem Rotor 6 einer elektrischen Maschine 7 zu dem Maschinensatz verbunden. Der Rotor 6 wird durch die Wasserturbine 3 angetrieben und rotiert innerhalb eines prinzipmäßig angedeuteten Stators 8 um eine Rotationsachse 9, welche, wie bei derartigen Wasserkraftanlagen 1 häufig üblich, in Richtung der Schwerkraft g ausgerichtet ist. Rotor 6 und Stator 7 bilden zusammen die als Generator genutzte elektrische Maschine 7. Diese dient der Erzeugung von elektrischer Energie aus der potenziellen Energie des Wassers. Ebenso wäre es denkbar, anstelle der Wasserturbine 3 eine Pumpturbine einzusetzen, welche in einem ersten Zustand analog zur Wasserturbine 3 Energie in der als Generator genutzten elektrischen Maschine 7 erzeugt, und welche in einem zweiten Betriebszustand Wasser aus dem Bereich des Unterwassers zurück in den Bereich des Oberwasser pumpen kann. Die Wasserkraftanlage 1 wäre in diesem Fall ein Pumpspeicherkraftwerk, welches zur Speicherung von Energie durch das Pumpen von Wasser auf ein Niveau mit höherer potenzieller Energie geeignet ist.

In der Schnittdarstellung der Figur 2 ist ein Ausschnitt aus einem Teil des Rotors 6 zu erkennen. Dieser rotiert um die mit 9 bezeichnete Rotationsachse. Der Rotor 6 selbst besteht im Wesentlichen aus einem Blechpaket 10 sowie einer mit 11 bezeichneten Nabe. Der Aufbau als Blechpaket 10 bedeutet, dass der Rotorkörper in axialer Richtung der Rotationsachse 9 aus einer Vielzahl von einzelnen Blechen aufgestapelt ist. Dies ist in der Darstellung der Figur 2 im linken unteren Teil des dargestellten Ausschnitts durch einige angedeutete Bleche symbolisiert. Die Nabe 11 kann dabei einstückig mit dem Rotorkörper 10 und damit ebenfalls aus einzelnen Blechen ausgeführt sein, oder sie kann als Zentralelement in anderer Bauart aufgebaut sein und die Bleche des Rotorkörpers 10 entsprechend tragen. Ungeachtet des konkreten Aufbaus ist es immer so, dass die Nabe 11 drehfest mit dem Rotorkörper 10 verbunden ist. Radiale Bewegungen zwischen der Nabe 11 und dem Rotorkörper 10 können möglich sein.

Im Bereich des Rotorkörpers 10 befinden sich in axialer Richtung verlaufende, in radialer Richtung nach außen offene Nuten 12, von denen hier lediglich der Nutgrund mit dem Bezugszeichen 12 versehen ist. In diesen Nuten 12 sind jeweils zwei isolierte elektrische Leiter 13, sogenannte Stäbe 13 eingelegt. Im Bereich des Wickelkopfs verlassen diese Stäbe 13 die Nuten 12 und ragen in axialer Richtung der Rotationsachse 9 aus dem Blechpaket 10 heraus. Die einzelnen Stäbe 13 sind dann mit weiteren Stäben 13, welche aus benachbarten Nuten 12 herausragen, entsprechend verbunden, um so die Wicklung des Rotors 6 zu realisieren. Im Bereich dieses Wickelkopfs sind die über das Blechpaket 10 in axialer Richtung überstehenden Abschnitte der Stäbe 13 entsprechend befestigt. Dies ist für die hier vorliegende Erfindung nicht von Bedeutung, sodass die an sich bekannte Befestigung zur Vereinfachung der Darstellung hier nicht eingezeichnet ist. Vergleichbare Stäbe 13 finden sich auch im Stator 8 der elektrischen Maschine 7.

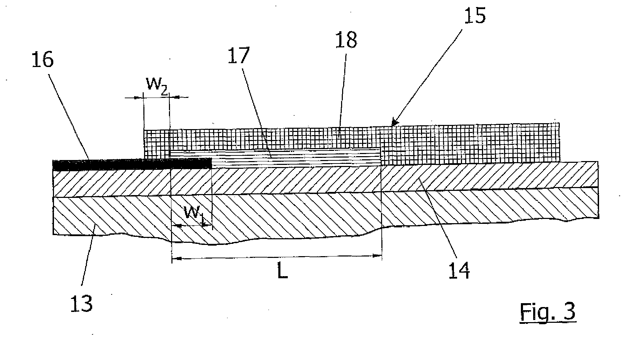

Die Stäbe 13 weisen sowohl im Rotor 6 als auch im Stator 8 eine in der Schnittdarstellung der Figur 3 erkennbare Hochspannungsisolierung 14 auf, welche den elektrischen Leiter 13 umgibt. Diese ist typischerweise aus einem mit Glimmerpartikeln versehenen Band aufgebaut, welches um den Stab 13 gewickelt und anschließend mit einem Harz typischerweise in einem VPI-Prozess getränkt wird. Auch diese Hochspannungsisolierung 14 ist für die hier vorliegende Erfindung von untergeordneter Bedeutung, sodass hierauf nicht näher eingegangen wird. Neben dem genannten Beispiel zur Ausführung der Hochspannungsisolierung mittels eines Glimmerbands sind Alternativen aus dem allgemeinen Stand der Technik bekannt und üblich. Auch diese könnten hier entsprechend eingesetzt werden.

In dem Bereich, in dem die Stäbe 13 nun über das Blechpaket 10 hinausragen, befindet sich der sogenannte Endglimmschutz 15, welcher auch häufig abgekürzt als EGS oder im englischsprachigen Raum als ECP (End Corona Protection) bezeichnet wird. Der Endglimmschutz 15 ist dabei eine Materialschicht mit eingeschränkter elektrischer Leitfähigkeit oder ein elektrischer Halbleiter, welcher außen auf der Hochspannungsisolierung 14 angebracht ist. In dem Bereich, in dem die Stäbe 13 innerhalb des Blechpakets 10 beziehungsweise in den Nuten 12 des Blechpakets 10 verlaufen, befindet sich der sogenannte Außenglimmschutz 16, welcher auch mit AGS abgekürzt wird. Im englischsprachigen Raum wird dieser Außenglimmschutz auch als OCP (Outer Corona Protection) bezeichnet. Zur Verdeutlichung ist in der Darstellung der Figur 2 in dem über das Blechpaket 10 hinausstehenden Teil der Stäbe 13 dieser Außenglimmschutz 16 geringfügig über das Blechpaket 10 hinausgezeichnet, bevor sich an diesem in an sich bekannter Art und Weise der Endglimmschutz 15 anschließt.

In der vergrößerten prinzipmäßigen Schnittdarstellung der Figur 3 ist dieser Aufbau nochmals im Detail zu erkennen. Mit durchgehend schwarzer Farbe dargestellt ist der Außenglimmschutz 16 in dem in Figur 3 dargestellten linken Bereich auf die Hochspannungsisolierung 14 aufgebracht. Dieser ist an sich bekannter Art und Weise ausgeführt. Er kann beispielsweise so ausgeführt sein, wie es in der eingangs genannten deutschen Offenlegungsschrift beschrieben ist. Im Anschluss an den Außenglimmschutz 16 ist ein Lack 17 auf die Hochspannungsisolierung 14 aufgetragen. Der Lack 17 hat dabei eine Gesamtlänge von L und ist im Übergangsbereich zwischen dem Außenglimmschutz 16 und dem Endglimmschutz 15 angeordnet. Er ist Teil des Endglimmschutzes 15. Der Lack 17 kann vorzugsweise in einer einzigen Schicht beispielsweise durch einen Pinsel aufgetragen werden. Er soll in der bevorzugten Ausführungsform als Lack 17 auf der Basis eines Alkydharzes ausgebildet sein. Er kann dafür zwei unterschiedliche Alkydharz-Komponenten, einen Härter, beispielsweise einen säurebasierten Härter, sowie Siliciumcarbidpartikel zur Erzeugung einer eingeschränkten elektrischen Leitfähigkeit aufweisen. Der Anteil an Siliciumpartikeln beträgt dabei 40 % bis 60 %, vorzugsweise ca. 50 % des Gesamtgewichts des Lacks 17. Im Falle der Verwendung von Nanopartikeln 20 % bis 50 %.

Alternativ zur Ausführung des Lacks 17 auf der Basis eines Alkydharzes ist selbstverständlich auch eine andersartige Ausgestaltung, beispielsweise auf der Basis von Epoxydharz, Polyurethan oder Ähnlichem möglich.

In der hier dargestellten Ausgestaltung des Endglimmschutzes 15 überlappt der Lack 17 den Außenglimmschutz 16 dabei um eine Wegstrecke w₁, sodass ein sicherer und zuverlässiger Kontakt zwischen dem Material des Außenglimmschutzes 16 und dem Lack 17 in jedem Fall gewährleistet ist. Die Wegstrecke w₁ kann dabei 7 bis 20 %, vorzugsweise ca. 10 % der Gesamtlänge L des aufgebrachten Lacks 17 betragen. Die Gesamtlänge L des aufgebrachten Lacks 17 ist dabei selbstverständlich immer von der Bauart und den Rahmenbedingungen an der einzelnen elektrischen Maschine 7 abhängig. Er wird bei typischen Aufbauten jedoch zwischen ca. 50 mm und 200 mm betragen. Demnach würde die Wegstrecke w₁ vorzugsweise 5 mm bis 20 mm betragen.

Nach dem Auftragen des Lacks 17, was wie bereits erwähnt beispielsweise mittels eines Pinsels erfolgen kann, wird der Lack 17 zuerst abgetrocknet, vorzugsweise für eine Zeit von wenigstens einer Stunde, um das Entweichen von flüchtigen Lösungsmitteln zu erreichen. Anschließend kann der Lack 17 dann in einem Ofen ausgehärtet werden. Typische Temperaturen zum Aushärten liegen dabei in einem Bereich von 100° C bis 160° C. Die Zeitspanne variiert typischerweise von 2 bis 12 Stunden. Typische Bedingungen könnten beispielsweise das Aushärten bei einer Temperatur von 120° C für 12 Stunden im Ofen sein. Nachdem das Trocknen und Aushärten des Lacks 17 abgeschlossen ist, kann der Aufbau in an sich bekannter Art und Weise mit einem Band 18 zur Vervollständigung des Endglimmschutzes 15 versehen werden. Dieses Band 18, welches entweder mit Partikeln mit eingeschränkter elektrischer Leitfähigkeit oder mit entsprechenden Fasern in einem Vlies oder Gewebe des Bands 18 mit eingeschränkter elektrischer Leitfähigkeit versehen ist, wird dazu in an sich bekannter Art und Weise um die Hochspannungsisolierung 14 des Stabs 13 gewickelt, anschließend mit einem Harz getränkt und ausgehärtet. Der Aufbau und das Verfahren kann dabei genau so realisiert werden, wie es beim herkömmlichen Endglimmschutz ohne den eingebrachten Lack 17 ebenfalls bekannt und üblich ist.

In der Ausgestaltung des Endglimmschutzes 15 ist es dabei vorgesehen, dass der Lack 17 auf seiner gesamten Länge L von dem Band 18 des Endglimmschutzes 15 umgeben ist, wobei das Band 18 auf der dem Außenglimmschutz 16 abgewandten Seite des Lacks 17 über die Gesamtlänge L des Lacks 17 hinaus verläuft. Dadurch, dass der gesamte Lack 17 unter dem Band 18 zu liegen kommt, kann dieser durch das Band 18 entsprechend geschützt werden. Eine einzige aufgetragene Schicht des Lacks 17 reicht daher zum Erzielen der Verbesserung des Endglimmschutzes 15 aus.

In der in Figur 3 dargestellten Ausführungsform ist es ferner vorgesehen, dass das Band 18 die Gesamtlänge L des Lacks 17 überragt und ihrerseits den Außenglimmschutz 16, um ein in der Darstellung der Figur 3 mit w₂ bezeichneten Wegstrecke überragt. Diese Wegstrecke w₂ kann dabei im Rahmen von üblichen Fertigungstoleranzen vorzugsweise vergleichbar groß wie die Wegstrecke w₁, welche den Lack 17 den Außenglimmschutz 16 überlappt, ausgebildet sein. Wie bei der oben beschriebenen Ausführungsform kann die Wegstrecke w₂ also in etwa 5 mm bis 20 mm betragen. Somit sind ein idealer Schutz des Lacks 17 und eine gute Funktionalität des Glimmschutzes in dem hier dargestellten Aufbau gewährleistet.

## Patentansprüche

1. Glimmschutz für einen elektrischen Leiter (13) in einer rotierenden elektrischen Maschine (7) mit
1.1 einem Außenglimmschutz (16),
1.2 einem Endglimmschutz (15), welcher im Anschluss an den Außenglimmschutz (16) auf einer Hochspannungsisolierung (14) des elektrischen Leiters (13) angebracht ist, und
1.3 einem Band (18) mit eingeschränkter elektrischer Leitfähigkeit, welches um die Hochspannungsisolierung (14) des elektrischen Leiters (13) angeordnet und mit einem Harz getränkt ist, wobei
1.4 im Übergangsbereich zwischen dem Außenglimmschutz (16) und dem Band (18) des Endglimmschutzes (15) zumindest zwischen der Hochspannungsisolierung (14) und dem Band (18) ein Lack (17) mit eingeschränkter elektrischer Leitfähigkeit angeordnet ist, wobei
1.5 der Lack (17) auf der Hochspannungsisolierung (14) aufgetragen ist und den Außenglimmschutz (16) um eine Wegstrecke (w₁) überlappt, und wobei
1.6 das Band (18) die Gesamtlänge (L) des Lacks (17) überragt und zusätzlich den Außenglimmschutz (16) um eine Wegstrecke (w₂) überlappt.

2. Glimmschutz nach Anspruch 1, **dadurch gekennzeichnet, dass** der Lack (17) zumindest seitlich neben dem Außenglimmschutz (16) auf der Hochspannungsisolierung (14) mit einer kürzeren Gesamtlänge (L) als von dem Band (18) umwickelt ist, angeordnet ist.

3. Glimmschutz nach Anspruch 1 oder 2, **dadurch gekennzeichnet, dass** das Band (18) die Gesamtlänge (L) des Lacks (17) außen umgibt.

4. Glimmschutz nach Anspruch 1, 2 oder 3, **dadurch gekennzeichnet, dass** die Wegstrecke (w₁, w₂) 7 - 20 %, vorzugsweise ca. 10 % der Gesamtlänge (L) des Lacks (17) entspricht.

5. Glimmschutz nach einem der Ansprüche 1 bis 4, **dadurch gekennzeichnet, dass** der Lack (17) in Form einer einzigen Lackschicht aufgebracht ist.

6. Glimmschutz nach einem der Ansprüche 1 bis 5, **dadurch gekennzeichnet, dass** der Lack (17) auf der Basis von Harz, vorzugsweise von Alkydharz, ausgebildet ist.

7. Glimmschutz nach einem der Ansprüche 1 bis 6, **dadurch gekennzeichnet, dass** der Lack (17) elektrisch leitfähige und/oder halbleitende Partikel und/oder Nanopartikel mit einem Anteil von 20 - 60 Gew.-%, vorzugsweise ca. 50 Gew.-%, des Gewichts des Lacks aufweist.

8. Glimmschutz nach Anspruch 7, **dadurch gekennzeichnet, dass** die Partikel Siliciumcarbid aufweisen oder aus solchen bestehen.

9. Verfahren zur Herstellung eines Glimmschutzes nach einem der Ansprüche 1 bis 8, wobei der mit der Hochspannungsisolierung (14) und dem Außenglimmschutz (16) versehene elektrische Leiter (13) mit dem Endglimmschutz (15) versehen wird, wobei seitlich neben dem Außenglimmschutz (16), und überlappend mit diesem, der Übergangsbereich der Hochspannungsisolierung zwischen dem Außenglimmschutz (16) und dem Endglimmschutz (15) mit dem Lack (17) bestrichen wird, wonach der Lack (17) getrocknet und/oder ausgehärtet wird, und wonach das Band (18) des Endglimmschutzes (15), das eine eingeschränkte elektrische Leitfähigkeit aufweist, die Gesamtlänge (L) des Lacks (17) überragend und zusätzlich den Außenglimmschutz (16) um eine Wegstrecke (w₂) überlappend aufgewickelt wird, mit einem Harz getränkt und ausgehärtet wird.

10. Verfahren nach Anspruch 9, **dadurch gekennzeichnet, dass** der Lack wenigstens 30 Minuten, vorzugsweise eine Stunde, bei Umgebungstemperaturen von 15 - 30 °C getrocknet wird, und danach wenigstens eine Stunde, vorzugsweise mehr als zwei Stunden, bei einer Temperatur von 115 - 125 °C ausgehärtet wird.

11. Elektrische Maschine mit wenigstens einem elektrischen Leiter (13), welcher einen Glimmschutz nach einem der Ansprüche 1 bis 8 oder einen nach einem der Ansprüche 9 oder 10 hergestellten Glimmschutz aufweist.

12. Elektrische Maschine nach Anspruch 11, **gekennzeichnet durch** ihre Ausbildung als Hochspannungsmotor/Generator, welcher eine Nennspannung von mehr als 15 kV aufweist.

## Claims

1. Corona shield for an electrical conductor (13) in a rotating electrical machine (7), comprising
1.1 an outer corona shield (16),
1.2 an end corona shield (15) mounted adjacent to the outer corona shield (16) on a high-voltage insulation (14) of the electrical conductor (13), and
1.3 a tape (18) of limited electrical conductivity disposed around the high voltage insulation (14) of the electrical conductor (13) and impregnated with a resin, wherein
1.4 in the transition region between the outer corona shield (16) and the tape (18) of the end corona shield (15), at least between the high-voltage insulation (14) and the tape (18), a lacquer (17) with limited electrical conductivity is arranged, wherein
1.5 the lacquer (17) is applied to the high-voltage insulation (14) and overlaps the outer corona shield (16) by a distance (w₁), and wherein
1.6 the tape (18) projects beyond the total length (L) of the lacquer (17) and additionally overlaps the outer corona shield (16) by a distance (w₂).

2. Corona shield according to claim 1, **characterized in that** the lacquer (17) is arranged at least laterally next to the outer corona shield (16) on the high-voltage insulation (14) with a shorter overall length (L) than is wound around by the tape (18).

3. Corona shield according to claim 1 or 2, **characterized in that** the tape (18) surrounds the total length (L) of the lacquer (17) on the outside.

4. Corona shield according to claim 1, 2 or 3, **characterized in that** the distance (w₁, w₂) corresponds to 7-20%, preferably to approx. 10%, of the total length (L) of the lacquer (17).

5. Corona shield according to one of claims 1 to 4, **characterized in that** the lacquer (17) is applied in the form of a single lacquer layer.

6. Corona shield according to one of claims 1 to 5, **characterized in that** the lacquer (17) is based on resin, preferably alkyd resin.

7. Corona shield according to one of claims 1 to 6, **characterized in that** the lacquer (17) comprises electrically conductive and/or semiconductive particles and/or nanoparticles in a proportion of 20-60 wt.%, preferably approx. 50 wt.%, of the weight of the lacquer.

8. Corona shield according to claim 7, **characterized in that** the particles comprise or consist of silicon carbide.

9. Method for producing a corona shield according to one of claims 1 to 8, wherein the electrical conductor (13) provided with the high-voltage insulation (14) and the outer corona shield (16) is provided with the end corona shield (15), wherein the transition region of the high-voltage insulation between the outer corona shield (16) and the end corona shield (15) is coated with the lacquer (17) laterally beside the outer corona shield (16), and overlapping the latter, whereupon the lacquer (17) is dried and/or cured, and whereupon the tape (18) of the end corona shield (15), which has a limited electrical conductivity, projects beyond the total length (L) of the lacquer (17) and is additionally wound up overlapping the outer corona shield (16) by a distance (w₂), is impregnated with a resin and cured.

10. Method according to claim 9, **characterized in that** the lacquer is dried for at least 30 minutes, preferably one hour, at ambient temperatures of 15-30°C and then cured for at least one hour, preferably more than two hours, at a temperature of 115-125°C.

11. Electrical machine having at least one electrical conductor (13) which has a corona shield according to one of claims 1 to 8 or a corona shield produced according to one of claims 9 or 10.

12. Electric machine according to claim 11, **characterized by** its design as a high-voltage motor/generator having a rated voltage of more than 15 kV.

## Revendications

1. Protection anti-effluve pour un conducteur électrique (13) dans une machine électrique rotative (7) avec
1.1 une protection anti-effluve externe (16),
1.2 une protection anti-effluve d'extrémité (15), appliquée à la suite de la protection anti-effluve externe (16) sur une isolation haute tension (14) du conducteur électrique (13), et
1.3 une bande (18) à conductivité électrique restreinte, qui est disposée autour de l'isolation haute tension (14) du conducteur électrique (13) et imbibée de résine, dans laquelle
1.4 un vernis (17) à conductivité électrique restreinte est disposé dans la zone de transition entre la protection anti-effluve externe (16) et la bande (18) de la protection anti-effluve d'extrémité (15), au moins entre l'isolation haute tension (14) et la bande (18),
1.5 le vernis (17) étant appliqué sur l'isolation haute tension (14) et recouvrant la protection anti-effluve externe (16) sur une distance (w₁), et
1.6 la bande (18) dépassant la longueur totale (L) du vernis (17) et recouvrant en outre la protection anti-effluve externe (16) sur une distance (w₂).

2. Protection anti-effluve selon la revendication 1, **caractérisé en ce que** le vernis (17) est disposé au moins latéralement à côté de la protection anti-effluve externe (16) sur l'isolation haute tension (14) sur une longueur totale (L) plus courte que la longueur entourée par la bande (18).

3. Protection anti-effluve selon la revendication 1 ou 2, **caractérisé en ce que** la bande (18) entoure la longueur totale (L) du vernis (17) sur l'extérieur.

4. Protection anti-effluve selon la revendication 1, 2 ou 3, **caractérisé en ce que** la distance (w₁, w₂) représente entre 7 et 20 %, de préférence environ 10 % de la longueur totale (L) du vernis (17).

5. Protection anti-effluve selon l'une des revendications 1 à 4, **caractérisée en ce que** le vernis (17) est appliqué sous la forme d'une seule couche de vernis.

6. Protection anti-effluve selon l'une des revendications 1 à 5, **caractérisée en ce que** le vernis (17) est à base de résine, de préférence de résine alkyde.

7. Protection anti-effluve selon l'une des revendications 1 à 6, **caractérisée en ce que** le vernis (17) contient des particules et/ou nanoparticules électriquement conductrices et/ou semiconductrices dans une proportion de 20 à 60 % en poids, de préférence d'environ 50 % en poids par rapport au poids du vernis.

8. Protection anti-effluve selon la revendication 7, **caractérisée en ce que** les particules contiennent du carbure de silicium ou en sont composées.

9. Procédé pour la fabrication d'une protection anti-effluve selon l'une des revendications 1 à 8, dans lequel le conducteur électrique (13) muni de l'isolation haute tension (14) et de la protection anti-effluve externe (16) est muni de la protection anti-effluve d'extrémité (15),
dans lequel le vernis (17) est appliqué dans la zone de transition de l'isolation haute tension entre la protection anti-effluve externe (16) et la protection anti-effluve d'extrémité (15), latéralement à côté de la protection anti-effluve externe (16) et en recouvrant celle-ci, après quoi le vernis (17) est séché et/ou durci, et après quoi la bande (18) de la protection anti-effluve d'extrémité (15), qui présente une conductivité électrique restreinte, est enroulée en recouvrant la longueur totale (L) du vernis (17) ainsi que la protection anti-effluve externe (16) sur une distance (w₂), imprégnée de résine et durcie.

10. Procédé selon la revendication 9, **caractérisé en ce que** le vernis est séché pendant au moins 30 minutes, de préférence une heure, à une température ambiante de 15 à 30 °C, puis durci pendant au moins une heure, de préférence plus de deux heures, à une température de 115 à 125 °C.

11. Machine électrique avec au moins un conducteur électrique (13) qui présente une protection anti-effluve selon l'une des revendications 1 à 8 ou une protection anti-effluve fabriquée selon les revendications 9 ou 10.

12. Machine électrique selon la revendication 11, **caractérisée en ce qu'**elle est conçue comme un moteur/générateur à haute tension présentant une tension nominale de plus de 15 kV.
